# EUROPEAN PATENT APPLICATION

(11) **EP 4 671 999 A1**
(43) Date of publication of application: **31.12.2025**
(21) Application number: 25158700.2
(22) Date of filing: 18.02.2025
(51) Int. Cl.: G06F 12/02, G06F 3/06

(54) **METHOD AND DEVICE FOR GARBAGE COLLECTION OF A ZONED STORAGE DEVICE, AND STORAGE MEDIUM**

(30) Priority: 27.06.2024 CN 202410851884
(71) Applicant: Beijing Volcano Engine Technology Co., Ltd., Beijing 100190 (CN)
(72) Inventor: GAO, Jiale, Beijing 100028 (CN); GUO, Zhihong, Beijing 100028 (CN); LIU, Jinxin, Beijing 100028 (CN); DONG, Chengyu, Beijing 100028 (CN)
(74) Representative: Marks & Clerk LLP

(57) **Abstract**

Provided in examples of the disclosure are a method and device for garbage collection of a zoned storage device, and a storage medium. Valid data segments in a source zone to be collected in the zoned storage device are determined (S201); each valid data segment is read (S202) from the source zone, the read valid data segments are written into cache pools, and the valid data segments in the same cache pool are aggregated into a valid aggregated data segment; and a target cache pool to be written into the zoned storage device is determined (S203), the valid aggregated data segment in the target cache pool is written into a target zone, and storage space of the source zone is collected (S204).

## Description

### FIELD

Examples of the disclosure relate to the technical field of computer and network communication, and in particular to a method and device for garbage collection of a zoned storage device, and a storage medium.

### BACKGROUND

A solid state disk or a solid state drive (SSD), has been widely applied in a variety of storage centers after years of development. The traditional SSD is provided to a host in a form of a block device. However, it is extremely difficult for the host to give play to true performance of the SSD. Moreover, data is randomly stored, resulting in an incapability to distinguish cold data and hot data. Furthermore, it is necessary to migrate valid data and erase data by means of garbage collection. However, the garbage collection inside the SSD will consume a significant amount of channel bandwidth, resulting in a significant reduction in the performance of the SSD. Moreover, delay of the host will not be ensured. As a result, the garbage collection further affects lifespan of the SSD. A zoned storage (ZNS) protocol and a ZNS device have emerged because the traditional SSD has these drawbacks and the host is closer to the data and knows more details about the data.

In a ZNS device, an entire device is divided into zones that can only be sequentially written. It is necessary to migrate valid data inside the zone to other zones and then erase the zone when a garbage collection of the ZNS device is performed. In this way, the zone can be reused.

However, garbage collection has an impact on the ZNS device when a large number of data entries are stored in the zone, thereby affecting normal reading and writing performance of the ZNS device.

### SUMMARY

Examples of the disclosure provide a method and device for garbage collection of a zoned storage device, and a storage medium, so as to avoid impact on a zoned storage device during garbage collection and ensure normal reading and writing performance of the zoned storage device.

In a first aspect, a method for garbage collection of a zoned storage device is provided in an example of the disclosure. The method includes:
determining, according to file object metadata cached in a memory, valid data segments in a source zone to be collected in the zoned storage device, where file objects corresponding to the file object metadata are stored in the zoned storage device;
reading each valid data segment from the source zone, writing, according to file objects to which the valid data segments belong, the read valid data segments into cache pools corresponding to the file objects to which the valid data segments belong in the memory, and aggregating the valid data segments in the same cache pool into a valid aggregated data segment; and
determining a target cache pool to be written into the zoned storage device from all the cache pools, writing, based on a sequential writing mechanism, the valid aggregated data segment in the target cache pool into a target zone in the zoned storage device, and collecting storage space of the source zone after all the valid data segments in the source zone are read.

In a second aspect, a device for garbage collection of a zoned storage device is provided in an example of the disclosure. The device includes:
a valid data determining unit, configured to determine, according to file object metadata cached in a memory, valid data segments in a source zone to be collected in the zoned storage device, where file objects corresponding to the file object metadata are stored in the zoned storage device;
a reading unit, configured to read each valid data segment from the source zone, write, according to file objects to which the valid data segments belong, the read valid data segments into cache pools corresponding to the file objects to which the valid data segments belong in the memory, and aggregate the valid data segments in the same cache pool into a valid aggregated data segment; and
a writing unit, configured to determine a target cache pool to be written into the zoned storage device from all the cache pools, write, based on a sequential writing mechanism, the valid aggregated data segment in the target cache pool into a target zone in the zoned storage device, and collect storage space of the source zone after all the valid data segments in the source zone are read.

In a third aspect, an electronic device is provided in an example of the disclosure. The electronic device includes: at least one processor and a memory, where
the memory stores a computer-executable instruction; and
the at least one processor executes the computer-executable instruction stored in the memory, such that the at least one processor executes the method for garbage collection of a zoned storage device of various possible designs of the above first aspect and second aspect.

In a fourth aspect, a computer-readable storage medium is provided in an example of the disclosure. The computer-readable storage medium stores a computer-executable instruction, and a processor implements the method for garbage collection of a zoned storage device of various possible designs of the above first aspect and second aspect when executing the computer-executable instruction.

In a fifth aspect, a computer program product is provided in an example of the disclosure. The computer program product includes a computer-executable instruction, where a processor implements the method for garbage collection of a zoned storage device of various possible designs of the above first aspect and second aspect when executing the computer-executable instruction.

According to the method and device for garbage collection of a ZNS device, and the storage medium according to the examples of the disclosure, the valid data segments in the source zone to be collected in the ZNS device are determined according to file object metadata cached in a memory, where file objects corresponding to the file object metadata are stored in the ZNS device; each valid data segment is read from the source zone, the read valid data segments are written into cache pools corresponding to the file objects to which the valid data segments belong in the memory according to the file objects to which the valid data segments belong, and the valid data segments in the same cache pool are aggregated into a valid aggregated data segment; and a target cache pool to be written into the ZNS device is determined from all the cache pools, the valid aggregated data segment in the target cache pool is written into a target zone in the ZNS device based on a sequential writing mechanism, and the storage space of the source zone is collected after all the valid data segments in the source zone are read. In the example, the valid data segments in the source zone are queried in batches from the file object metadata cached in the memory such that metadata queries can be reduced. Moreover, after each valid data segment in the source zone is read, the valid data segments are aggregated in the cache pools of the memory according to the file objects to which the valid data segments belong, and then written into the target zone, such that input/output per second can be effectively reduced. Thus, impact on the ZNS device is avoided, and normal reading and writing performance of the ZNS device is ensured. Moreover, aggregation of the valid data belonging to the same file object can provide a large bandwidth and reasonable delay for subsequent reading.

### BRIEF DESCRIPTION OF THE DRAWINGS

In order to more clearly illustrate the technical solutions in the examples of the disclosure or in the prior art, the accompanying drawings required for the description of the examples or the prior art will be briefly introduced below. Obviously, the accompanying drawings in the following description are some examples of the disclosure, and those of ordinary skill in the art would further be able to derive other accompanying drawings from these accompanying drawings without making creative efforts.
FIG. 1 is a scenario example diagram of a method for garbage collection of a ZNS device according to an example of the disclosure;
FIG. 2 is a schematic flow diagram of a method for garbage collection of a ZNS device according to an example of the disclosure;
FIG. 3 is a schematic diagram showing blocks in a ZNS device and an organization form of metadata in a memory according to an example of the disclosure;
FIG. 4 is a schematic flow diagram of a method for garbage collection of a ZNS device according to another example of the disclosure;
FIG. 5 is a structural block diagram of a device for garbage collection of a ZNS device according to an example of the disclosure; and
FIG. 6 is a schematic diagram of a hardware structure of an electronic device according to an example of the disclosure.

### DETAILED DESCRIPTION OF EMBODIMENTS

In order to make the objectives, technical solutions and advantages of the examples of the disclosure more clear, the technical solutions in the examples of the disclosure will be clearly and completely described below in combination with the accompanying drawings in the examples of the disclosure, and obviously, the described examples are some examples rather than all examples of the disclosure. Based on the examples of the disclosure, all other examples acquired by those of ordinary skill in the art without making creative efforts fall within the scope of protection of the disclosure.

In a ZNS device, an entire device is divided into zones that can only be sequentially written. It is necessary to migrate valid data inside the zone to other zones and then erase the zone (during erasure, a write pointer may be reset to a starting address of the zone by means of a Zone Reset command) when a garbage collection of the ZNS device is performed. In this way, the zone can be reused.

However, garbage collection has an impact on the ZNS device when a large number of data entries are stored in the zone, thereby affecting normal reading and writing performance of the ZNS device. A specific process of the above may include:
a) reading reverse index information of each data segment in a source zone;
b) sequentially traversing the reverse index information of each data segment, and querying metadata in a memory to determine whether the data segment is a valid data segment, if the data segment is an invalid data, c)is skipped, and otherwise, c) is executed;
c) reading the valid data segment and writing the valid data segment into a target zone; and
d) repeating the above steps until all the data segments in the source zone are traversed, and erasing the source zone, such that the source zone becomes an empty zone that may be reused.

However, as NAND capacity of a SSD continues to increase, a size of a zone of the ZNS device is larger and larger, and the number of the data entries stored in the zone is more and more. Both of searching for the reverse index information in a process of determining whether the data segment is the valid data segment and migrating each valid data segment, will generate a large number of query requests or reading and writing requests, thereby increasing a pressure of the ZNS device, and affecting normal reading and writing (user-oriented foreground reading and writing) of the ZNS device.

In order to solve at least one technical problem above, the disclosure provides a method for garbage collection of a ZNS device. The valid data segments in the source zone to be collected in the ZNS device are determined according to file object metadata cached in a memory, where file objects corresponding to the file object metadata are stored in the ZNS device; each valid data segment is read from the source zone, the read valid data segments are written into cache pools corresponding to the file objects to which the valid data segments belong in the memory according to the file objects to which the valid data segments belong, and the valid data segments in the same cache pool are aggregated into a valid aggregated data segment; and a target cache pool to be written into the ZNS device is determined from all the cache pools, the valid aggregated data segment in the target cache pool is written into a target zone in the ZNS device based on a sequential writing mechanism, and the storage space of the source zone is collected after all the valid data segments in the source zone are read. In the example, the valid data segments in the source zone are queried in batches from the file object metadata cached in the memory such that metadata queries can be reduced. Moreover, after each valid data segment in the source zone is read, the valid data segments are aggregated in the cache pools of the memory according to the file objects to which the valid data segments belong, and then written into the target zone, such that input/output per second (IOPS) can be effectively reduced. Thus, impact on the ZNS device is avoided, and normal reading and writing performance of the ZNS device is ensured. Moreover, aggregation of the valid data belonging to the same file object can provide a large bandwidth and reasonable delay for subsequent reading.

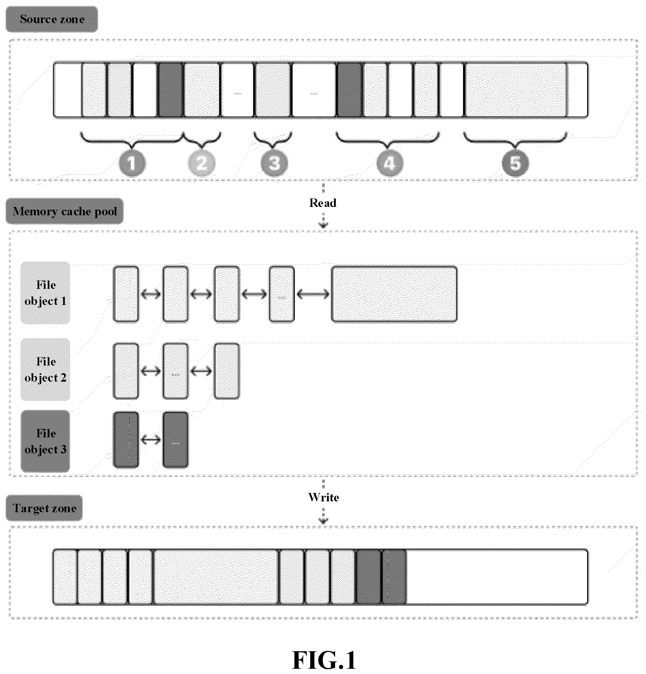

An application scenario of a method for garbage collection of a ZNS device of the disclosure is shown in FIG. 1. Valid data segments in a source zone to be collected in the ZNS device are determined according to file object metadata cached in a memory; each valid data segment is read from the source zone, the read valid data segments are written into cache pools corresponding to the file objects to which the valid data segments belong in the memory according to the file objects to which the valid data segments belong, and the valid data segments in the same cache pool are aggregated into a valid aggregated data segment; and a target cache pool to be written into the ZNS device is determined from all the cache pools, the valid aggregated data segment in the target cache pool is written into a target zone in the ZNS device based on a sequential writing mechanism, and storage space of the source zone is collected after all the valid data segments in the source zone are read.

It should be noted that data (including, but not limited to, data for analysis, stored data, displayed data, etc.) involved in the disclosure are all information and data authorized by users or fully authorized by all parties, and gathering, use and processing of relevant data need to comply with relevant laws, regulations and standards of relevant countries and regions, and corresponding operation portals are provided for the users to choose authorization or rejection.

The method for garbage collection of a ZNS device of the disclosure will be introduced in detail below in combination with the particular examples.

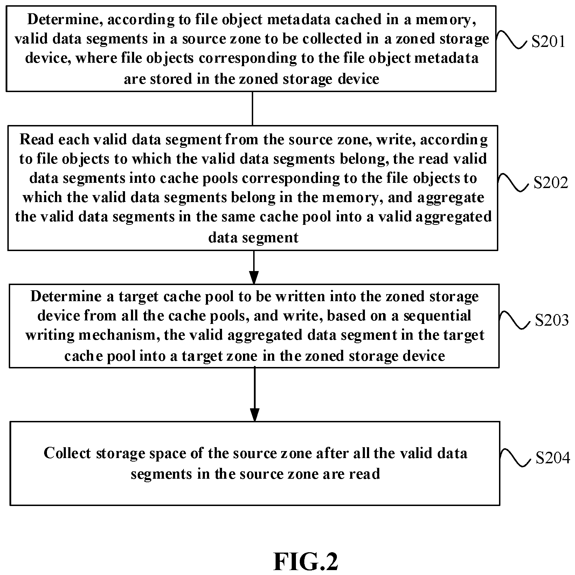

With reference to FIG. 2, a schematic flow diagram of a method for garbage collection of a ZNS device according to an example of the disclosure is shown. The method of the example may be applied to a terminal device or a server. The method for garbage collection of a ZNS device includes:

S201, valid data segments in a source zone to be collected in the ZNS device are determined according to file object metadata cached in a memory, where file objects corresponding to the file object metadata are stored in the ZNS device.

In the example, when it is necessary to collect garbage of the ZNS device, a zone needing garbage collection is determined first, as the source zone. In addition, a target zone for migrating the valid data segments in the source zone may be further selected. The target zone may be an empty zone. After valid data in the source zone is subsequently migrated into the target zone, the source zone may be emptied to collect storage space of the source zone, so as to collect the garbage.

Considering identification of valid data in the source zone when the garbage collection of the traditional ZNS device is performed, typically, reverse index information of each data segment (data entry) in the source zone is read. Each data segment is part of data of one or more file objects. Moreover, the reverse index information of each data segment is sequentially traversed to query the file object metadata cached in the memory. If matching metadata is queried for the reverse index information of any data segment, the data segment is determined as the valid data segment, and otherwise, the data segment is determined as an invalid data segment (garbage data). When the number of data segments in the source zone is large (possibly hundreds of thousands of data segments or millions of data segments), excessive query per second (QPS) is caused by traversing the reverse index information of each data segment to query the metadata. Thus, the metadata is impacted, and the pressure of the ZNS device is increased, thereby affecting reading and writing performance. In order to solve the above technical problem, in the example, it is not necessary to query the metadata in the memory corresponding to the reverse index information of each data segment of the source zone to determine whether the data segment is the valid data segment, but the valid data segments in the source zone are determined in batches directly according to the file object metadata cached in the memory. Thus, the number of queries is reduced, impact on the metadata is avoided, and increase in the pressure of the ZNS device is avoided in a process of querying the valid data segments.

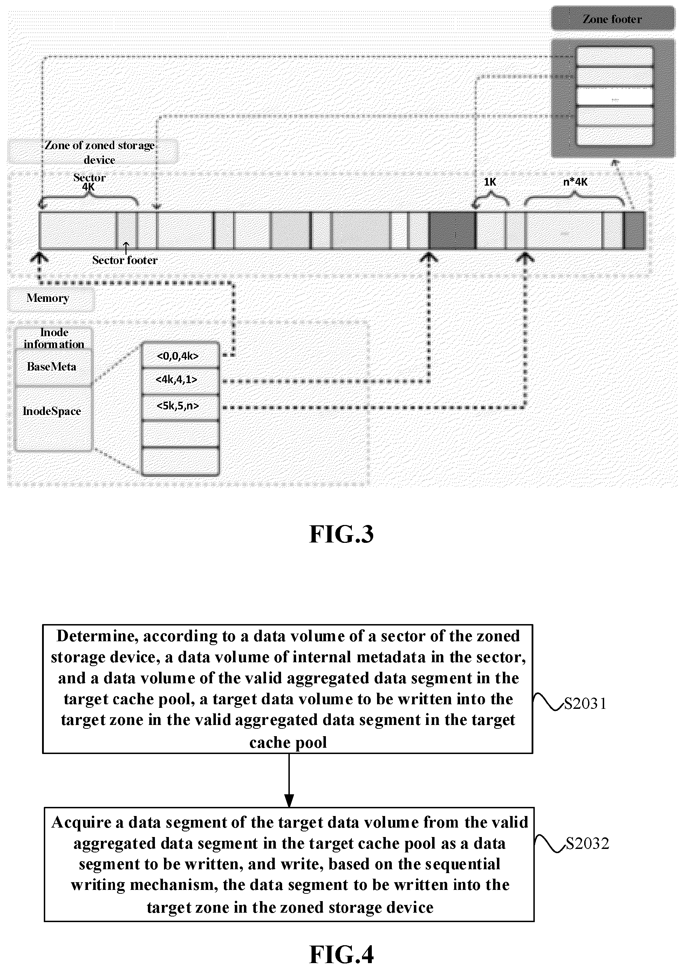

Specifically, metadata of each file object is cached in the memory, as shown in FIG. 3, i.e. index node (Inode) information. An Inode is a data structure in a file system, and is configured to store the metadata of the file objects. The Inode information includes base metadata (BaseMeta) and Inode space (InodeSpace). Basic attributes of the Inode, such as an Inode identifier (Inodeid), metadata change time (ctime), last access time (atime), last modify time (mtime), a file length (length) and an actual space occupied by a file on a disk (physical_length), are recorded in the BaseMeta. The InodeSpace is a key-value pair structure, and mainly records a position of a logical range of the Inode on the ZNS device, i.e. a mapping relation between each data segment of the file object and an identifier of a zone in which each data segment is located in the ZNS device.

Further, the data segments corresponding to the identifier of the source zone in each data segment of the file object is queried from the file object metadata cached in the memory as the valid data segments in the source zone according to the identifier of the source zone. For example, as shown in the figure, for any file object metadata in the memory, different data blocks are recorded in the InodeSpace. Each data block includes a plurality of data segments. The plurality of data segments may be stored in one or more zones, and identifiers of zones in which the plurality of data segments are located are recorded by means of key-value pairs. It is only necessary to query the key-value pairs according to the identifier of the source zone. As long as the identifier of the source zone included in the key-value pairs is queried, the corresponding data block may be determined as the valid data. All the valid data may be queried based on a single query. It should be noted that if different file object metadata, i.e. different Inode information, is cached in the memory, data segments corresponding to the identifier of the source zone may be queried in the metadata of different file objects. Thus, valid data segments belonging to different file objects in the source zone may be finally determined.

S202, each valid data segment is read from the source zone, the read valid data segments are written into cache pools corresponding to the file objects to which the valid data segments belong in the memory according to the file objects to which the valid data segments belong, and the valid data segments in the same cache pool are aggregated into a valid aggregated data segment.

In the example, after all the valid data segments in the source zone are determined, it is necessary to migrate each valid data segment to the target zone. That is, each valid data segment is read from the source zone and then written into the target zone. However, considering that the valid data segments may not be continuous in the source zone, and the valid data segments may be large or small, a large number of IOPS (input/output per second) may be generated by directly writing each valid data segment into the target zone, and impact on the ZNS device is large. In order to solve the above problem, in the example, the cache pools may be created in the memory, one cache pool is created for each file object, and capacity of each cache pool may be set according to actual requirements. Further, the read valid data segments may be stored into the corresponding cache pools according to the file objects to which the valid data segments belong, and the valid data segments in the same cache pool may be aggregated into a whole segment of valid data, which is denoted as a valid aggregated data segment herein. Further, when the valid aggregated data segment is written into the target zone subsequently, it is only necessary to write the valid aggregated data segment into the target zone. Thus, the IOPS is reduced, and the impact on the ZNS device is reduced. Moreover, the valid data segments of the same file object is as continuous as possible, thereby providing a large bandwidth and reasonable delay for subsequent reading.

Optionally, when each valid data segment is read from the source zone, if each valid data segment is directly read, a large number of IOPS may also be generated, and the impact on the ZNS device is significant. Thus, in the example, a reading process is improved as follows:
in response to a data volume of any valid data segment in the source zone exceeding a first data volume threshold, the any valid data segment is directly read from the source zone; or
at least two adjacent valid data segments and the invalid data segment between the at least two valid data segments are determined as an aggregated data segment according to a data volume of each adjacent valid data segment and a data volume of an invalid data segment between adjacent valid data segments in the source zone, and the aggregated data segment is read in one shot from the source zone.

In the example, the data volume of any valid data segment in the source zone may be determined. If it is determined that the data volume of any valid data segment in the source zone exceeds the first data volume threshold, it may be determined that the valid data segment is a large block of data segment, and the valid data segment may be directly read from the source zone, for example, a valid data segment marked as 5 in FIG. 1. For small blocks of valid data blocks, adjacent valid data blocks may be aggregated, and a small number of invalid data blocks may be allowed to be mixed. That is, a large block of data segments may also be read in a greedy manner. For example, a large block of data segments marked as 1 and 4 in the source zone in FIG. 1 includes valid data segments and a small number of invalid data segments (white). Specifically, according to the data volume of each adjacent valid data segment in the source zone and the data volume of the invalid data segment between adjacent valid data segments, it may be determined which adjacent data segments (including the valid data segments and the invalid data segments) may be read as the large block of data segments (the large block of data segments is denoted as the aggregated data segment herein, but in fact, the data segments included in the aggregated data segment are originally connected to each other and have no true aggregation process).

Optionally, when the aggregated data segment is determined, it is necessary to satisfy some conditions in order to make the benefit of reading the aggregated data segment greater than that of reading the valid data segment individually. For example, the data volume of the invalid data segment between two adjacent valid data segments may not be excessively large (for example, the data volume needs to be less than the second data volume threshold), and a proportion of the total number of the invalid data segments in the aggregated data segment may not be excessively large (for example, the proportion needs to be less than the first preset proportion). In addition, the total data volume of the aggregated data segment may be further limited.

In specific implementation, when it is necessary to determine the aggregated data segment, the aggregated data segment may be determined by traversing. After one valid data segment (for example, a small valid data segment whose a data volume is less than a fourth data volume threshold) is added into the aggregated data segment, whether the data volume of the adjacent invalid data segment after the valid data segment is less than the second data volume threshold may be determined, and whether the proportion of the total data volume of the invalid data segment is less than the first preset proportion is determined in a case that the adjacent invalid data segment and the adjacent valid data segment thereafter are added into the aggregated data segment. If the two determinations are less, the valid data segment may be added into the aggregated data segment, and then subsequent data segments continue to be traversed.

In a subsequent traversing process, after any first valid data segment is added into the aggregated data segment, the first adjacent valid data segment and the first adjacent invalid data segment after the first valid data segment are added into the aggregated data segment in response to determining that the data volume of the first adjacent invalid data segment after the first valid data segment is less than the second data volume threshold and the proportion of the total data volume of the invalid data segments is less than the first preset proportion in a case that the first adjacent valid data segment and the first adjacent invalid data segment after the first valid data segment are added into the aggregated data segment.

Valid data marked as 2 and 3 in FIG. 1 are read individually since the valid data may not satisfy the above conditions.

It should be noted that various data volume thresholds and preset proportions in the example may be set according to actual requirements, which are not limited herein.

Further, in the case of reading the aggregated data segment from the source zone in one shot, since the aggregated data segment has the valid data segments and the invalid data segments, it is necessary to acquire valid data segments included in the aggregated data segment from the aggregated data segment, and then write the valid data segments into the cache pools corresponding to the file objects to which the valid data segments belong in the memory respectively, so as to achieve aggregation during reading and splitting before the valid data segments are written into the cache pools, and ensure that the invalid data segments are screened out at this time.

In addition, when the valid data segment is read, consistency of data may be further checked. For example, a check code (such as a cyclic redundancy check (CRC) code or a message digest 5 (MD5) code) of the valid data segment is calculated and compared with a check code stored in the metadata. If comparison is consistent, it is indicated that the valid data segment is consistent with the valid data segment in the memory.

S203, a target cache pool to be written into the ZNS device is determined from all the cache pools, and the valid aggregated data segment in the target cache pool is written into a target zone in the ZNS device based on a sequential writing mechanism.

In the example, considering that storage space of the cache pool in the memory is not infinite, it is necessary to write the valid aggregated data segment in the cache pool into the target zone after specified conditions are satisfied. Thus, the valid data segments are migrated from the source zone to the target zone through the cache pool. Moreover, it is ensured that the cache pool may release cache space, such that space is provided to continue to cache valid data blocks read from the source zone.

When the target cache pool to be written into the ZNS device is determined, the target cache pool may be determined based on a preset rule. Specifically, in response to determining that the data volume in any cache pool exceeds a third data volume threshold (for example, 128 Kb), it is indicated that the valid aggregated data segment in the cache pool is large enough, and the cache pool may be determined as the target cache pool to be written into the ZNS device. Alternatively, all the cache pools are determined as the target cache pool to be written into the ZNS device in response to determining that a total data volume in all the cache pools exceeds a second preset proportion (for example, 80%) of total capacity of all the cache pools. Thus, it is ensured that the target cache pool may release the cache space, so as to ensure that space is provided to store the subsequently read valid data blocks.

In addition, since sequential writing is needed in each zone of the ZNS device, the valid aggregated data segment to be written into the target zone is written into the target zone based on the sequential writing mechanism. Specifically, a current pointer position in the target zone may be determined to start to write the valid aggregated data segment at the pointer position.

S204, storage space of the source zone is collected after all the valid data segments in the source zone are read.

In the example, it is necessary to collect the storage space of the source zone finally. A collection timing may be any timing after all the valid data segments in the source zone are read, certainly may be the timing when all the valid data segments are written into the target zone, or may be any other timing, so as to finally complete garbage collection of the source zone.

According to the method for garbage collection of a ZNS device of the example, the valid data segments in the source zone to be collected in the ZNS device are determined according to the file object metadata cached in the memory, where file objects corresponding to the file object metadata are stored in the ZNS device; each valid data segment is read from the source zone, the read valid data segments are written into the cache pools corresponding to the file objects to which the valid data segments belong in the memory according to the file objects to which the valid data segments belong, and the valid data segments in the same cache pool are aggregated into the valid aggregated data segment; and the target cache pool to be written into the ZNS device is determined from all the cache pools, the valid aggregated data segment in the target cache pool is written into the target zone in the ZNS device based on the sequential writing mechanism, and the storage space of the source zone is collected after all the valid data segments in the source zone are read. In the example, the valid data segments in the source zone are queried in batches from the file object metadata cached in the memory such that metadata queries can be reduced. Moreover, after each valid data segment in the source zone is read, the valid data segments are aggregated in the cache pools of the memory according to the file objects to which the valid data segments belong, and then written into the target zone, such that IOPS can be effectively reduced. Thus, impact on the ZNS device is avoided, and normal reading and writing performance of the ZNS device is ensured. Moreover, aggregation of the valid data belonging to the same file object can provide a large bandwidth and reasonable delay for subsequent reading.

Based on any example above, the ZNS device in the example may use data layout shown in FIG. 3. Each zone of the ZNS device includes a plurality of sectors (a sector is typically 4 Kb in size) and a zone footer. Each sector may include a data portion and a sector footer. The sector footer is configured to store internal metadata of a sector, such as a file object to which the sector belongs and position information of the sector in the file object to which the sector belongs (for example, the ordinal number of the sector in the file object to which the sector belongs). The file object to which the sector belongs is configured to store reverse index information of a current zone, such as the scope of the file object to which the current zone belongs, position at which the file object is recorded in the current zone, and migration of data segments that may be used in a garbage collection process.

Based on the above example, when at S203, the valid aggregated data segment in the target cache pool is written into a target zone in the ZNS device based on a sequential writing mechanism, as shown in FIG. 4 for details, the method may include:

S2031, a target data volume to be written into the target zone in the valid aggregated data segment in the target cache pool is determined according to a data volume of a sector of the ZNS device, a data volume of internal metadata in the sector, and a data volume of the valid aggregated data segment in the target cache pool; and

S2032, a data segment of the target data volume is acquired from the valid aggregated data segment in the target cache pool as a data segment to be written, and the data segment to be written into the target zone is written into the ZNS device based on the sequential writing mechanism.

In the example, the ZNS device performs writing based on the sector (4 Kb), and the internal metadata in each sector occupies a control of the sector, and for example, occupies 16 bytes. Thus, data that may be actually written by one sector is 4 Kb-16 Byte. On this basis, if the data segment to be written is still written in a multiple of the data volume of the sector, some free space is inevitably generated in the last sector, resulting in waste of storage space. Thus, in the example, in order to maximize use of the storage space and avoid waste of the storage space, when the data segment to be written is written into the target zone, it should try to occupy a complete sector, such that each occupied sector has no residual space. In order to achieve the objective, in the example, the target data volume to be written into the target zone in the valid aggregated data segment in the target cache pool may be determined according to the data volume of the sector, the data volume of the internal metadata in the sector, and the data volume of the valid aggregated data segment in the target cache pool, the data segment of the target data volume may be acquired from the valid aggregated data segment as a data segment to be written, and the data segment to be written may be written into the target zone.

Optionally, when the target data volume is determined, the target number of sectors required may be determined according to the data volume of the valid aggregated data segment in the target cache pool and the data volume of the sector. For example, the data volume of the valid aggregated data segment may be divided by the data volume of the sector and rounded to obtain the target number of sectors, and certainly, the target number may be determined according to other algorithms. Further, a first product of the data volume of the sector and the target number and a second product of the data volume of the internal metadata in the sector and the target number are determined, and a difference between the first product and the second product is determined as the target data volume. For example, assuming that the target number of the sectors is 10, the data volume of the sector is 4 Kb, and the data volume of the internal metadata in the sector is 16 Byte, the target data volume is 4 Kb×10-16 Byte×10=40 Kb-160 Byte. Thus, after the data segment to be written of the target data volume is written into the target zone, only 10 complete sectors are occupied, and each occupied sector has no residual space.

Certainly, determination of the target data volume to be written into the target zone in the valid aggregated data segment in the target cache pool according to the data volume of the sector, the data volume of the internal metadata in the sector, and the data volume of the valid aggregated data segment in the target cache pool is not limited to the above way, and may be implemented in other ways, which is not limited in the example.

Further, when the valid aggregated data segment (a data segment to be written) is written into the target zone, the valid aggregated data segment may be sequentially written into each sector of the target zone. Moreover, the internal metadata is recorded in each sector, and rounded to record, including but not limited to, a file object to which a current sector belongs and position information in the file object to which the sector belongs, so as to complete writing.

In addition, in another optional example, a processing mode regarding a user writes a data segment of a certain file object into any zone is further provided. Specifically, when any current data segment is written into the zone, whether the current data segment and an adjacent preceding data segment belong to the same file object is determined. If the current data segment and the adjacent preceding data segment belong to the same file object, metadata of the current data segment and metadata of the preceding data segment is merged. For example, the current data segment and the preceding data segment are used as a whole data segment. Thus, only one piece of metadata is needed. Especially, it is only necessary to record a starting address, an ending address, a length of the data segment, and an identifier of the file object to which the data segment belongs once, so as to reduce occupation of the metadata. Thus, full memory metadata is achieved, and read delay is improved.

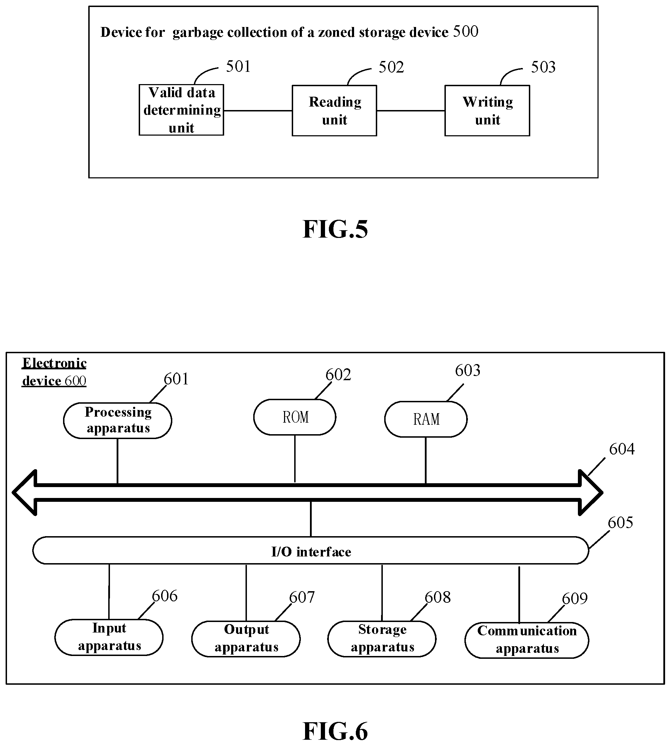

Corresponding to the method for garbage collection of a ZNS device in the above example, FIG. 5 is a structural block diagram of a device for garbage collection of a ZNS device according to an example of the disclosure. For ease of explanation, only a part relevant to the example of the disclosure is shown. With reference to FIG. 5, the device for garbage collection of a ZNS device 500 includes: a valid data determining unit 501, a reading unit 502 and a writing unit 503.

The valid data determining unit 501 is configured to determine, according to file object metadata cached in a memory, valid data segments in a source zone to be collected in the ZNS device, where file objects corresponding to the file object metadata are stored in the ZNS device;

The reading unit 502 is configured to read each valid data segment from the source zone, write, according to file objects to which the valid data segments belong, the read valid data segments into cache pools corresponding to the file objects to which the valid data segments belong in the memory, and aggregate the valid data segments in the same cache pool into a valid aggregated data segment; and

The writing unit 503 is configured to determine a target cache pool to be written into the ZNS device from all the cache pools, write, based on a sequential writing mechanism, the valid aggregated data segment in the target cache pool into a target zone in the ZNS device, and collect storage space of the source zone after all the valid data segments in the source zone are read.

In one or more examples of the disclosure, the file object metadata includes a mapping relation between each data segment of the file object and an identifier of a zone in which each data segment is located in the ZNS device; and
correspondingly, when determining, according to the file object metadata cached in the memory, the valid data segments in the source zone to be collected in the ZNS device, the valid data determining unit 501 is configured to:
query, according to an identifier of the source zone, data segments corresponding to the identifier of the source zone in each data segment of the file object from the file object metadata cached in the memory as the valid data segments in the source zone.

In one or more examples of the disclosure, when reading each valid data segment from the source zone, the reading unit 502 is configured to:
in response to a data volume of any valid data segment in the source zone exceeding a first data volume threshold, directly read the any valid data segment from the source zone; or
determine, according to a data volume of each adjacent valid data segment and a data volume of an invalid data segment between adjacent valid data segments in the source zone, at least two adjacent valid data segments and the invalid data segment between the at least two valid data segments as an aggregated data segment, and read the aggregated data segment in one shot from the source zone.

In one or more examples of the disclosure, when determining, according to the data volume of each adjacent valid data segment and the data volume of the invalid data segments between the adjacent valid data segments in the source zone, the at least two adjacent valid data segments and the invalid data segments between the at least two valid data segments as the aggregated data segment, the reading unit 502 is configured to:
after adding any first valid data segment into the aggregated data segment, add a first adjacent valid data segment and a first adjacent invalid data segment after the first valid data segment into the aggregated data segment in response to determining that a data volume of the first adjacent invalid data segment after the first valid data segment is less than a second data volume threshold and a proportion of a total data volume of invalid data segments is less than a first preset proportion in a case that the first adjacent valid data segment and the first adjacent invalid data segment after the first valid data segment are added into the aggregated data segment.

In one or more examples of the disclosure, when writing the read valid data segments into the cache pools corresponding to the file objects to which the valid data segments belong in the memory, the reading unit 502 is configured to:
acquire valid data segments from the aggregated data segment and write the valid data segments into the cache pools corresponding to the file objects to which the valid data segments belong in the memory respectively in a case that the aggregated data segment is read in one shot from the source zone.

In one or more examples of the disclosure, when determining the target cache pool to be written into the ZNS device from all the cache pools, the writing unit 503 is configured to:
in response to determining that a data volume in any cache pool exceeds a third data volume threshold, determine the any cache pool as the target cache pool to be written into the ZNS device; or
determine all the cache pools as the target cache pool to be written into the ZNS device in response to determining that a total data volume in all the cache pools exceeds a second preset proportion of total capacity of all the cache pools.

In one or more examples of the disclosure, when writing, based on the sequential writing mechanism, the valid aggregated data segment in the target cache pool into the target zone in the ZNS device, the writing unit 503 is configured to:
determine, according to a data volume of a sector of the ZNS device, a data volume of internal metadata in the sector, and a data volume of the valid aggregated data segment in the target cache pool, a target data volume to be written into the target zone in the valid aggregated data segment in the target cache pool; and
acquire a data segment of the target data volume from the valid aggregated data segment in the target cache pool as a data segment to be written, and write, based on the sequential writing mechanism, the data segment to be written into the target zone in the ZNS device.

In one or more examples of the disclosure, when determining, according to the data volume of a sector of the ZNS device, the data volume of the internal metadata in the sector, and the data volume of the valid aggregated data segment in the target cache pool, the target data volume to be written into the target zone in the valid aggregated data segment in the target cache pool, the writing unit 503 is configured to:
determine a target number of sectors required according to the data volume of the valid aggregated data segment in the target cache pool and the data volume of the sector; and
determine a first product of the data volume of the sector and the target number and a second product of the data volume of the internal metadata in the sector and the target number, and determine a difference between the first product and the second product as the target data volume, so that there is no residual space in each sector occupied after the data segment to be written of the target data volume is written into the target zone.

In one or more examples of the disclosure, when writing, based on the sequential writing mechanism, the valid aggregated data segment in the target cache pool into the target zone in the ZNS device, the writing unit 503 is configured to:
sequentially write the valid aggregated data segment into each sector of the target zone, and record the internal metadata in each sector, where the internal metadata is configured to record a file object to which a current sector belongs and position information in the file object to which the current sector belongs.

In one or more examples of the disclosure, the writing unit 503 is further configured to:
determine whether a current data segment belongs to the same file object as an adjacent preceding data segment in the zone when any current data segment is written into any zone of the ZNS device, and merge metadata of the current data segment and metadata of the previous data segment in response to the current data segment belonging to the same file object as the adjacent preceding data segment in the zone.

The device according to the example may be configured to execute the technical solution of the above method example, and the implementation principle and the technical effect of the device are similar, which will not be repeated herein in the example.

With reference to FIG. 6, a schematic structural diagram of an electronic device 600 suitable for implementing the examples of the disclosure is shown. The electronic device 600 may be a terminal device or a server. The terminal device may include, but not limited to, a mobile terminal such as a mobile phone, a notebook computer, a digital broadcast receiver, a personal digital assistant (PDA), a portable android device (PAD), a portable multimedia player (PMP) and a vehicle-mounted terminal (such as a vehicle-mounted navigation terminal), and a fixed terminal such as a digital television (TV) and a desktop computer. The electronic device shown in FIG. 6 is merely an example and should not pose any limitation to the functions and the scope of use of the example of the disclosure.

As shown in FIG. 6, the electronic device 600 may include a processing apparatus (such as a central processing unit and a graphics processing unit) 601 that may execute various suitable actions and processes according to programs stored in a read only memory (ROM) 602 or programs loaded from a storage apparatus 608 into a random access memory (RAM) 603. Various programs and data required for the operation of the electronic device 600 are further stored in the RAM 603. The processing apparatus 601, the ROM 602, and the RAM 603 are connected to each other by means of a bus 604. An input/output (I/O) interface 605 is also connected to the bus 604.

Usually, the following apparatuses may be connected to the I/O interface 605: an input apparatus 606 including a touch screen, a touchpad, a keyboard, a mouse, a camera, a microphone, an accelerometer and a gyroscope, for example; an output apparatus 607 including a liquid crystal display (LCD), a speaker and a vibrator, for example; the storage apparatus 608 including a magnetic tape and a hard drive, for example; and a communication apparatus 609. The communication apparatus 609 may allow the electronic device 600 to perform wireless or wired communication with other devices to exchange data. Although FIG. 6 shows the electronic device 600 having various apparatuses, it should be understood that not all of the shown apparatuses are required to be implemented or provided. More or less apparatuses may be alternatively implemented or provided.

Specifically, according to the example of the disclosure, the process described above with reference to the flow diagram may be implemented as a computer software program. For example, the example of the disclosure includes a computer program product including a computer program carried on a non-transitory computer-readable medium. The computer program includes program codes configured to execute the method shown in the flow diagram. In such an example, the computer program may be downloaded and installed from a network via the communication apparatus 609, or installed from the storage apparatus 608, or installed from the ROM 602. When the computer program is executed by the processing apparatus 601, the above functions defined in the method of the example of the disclosure are executed.

It should be noted that the computer-readable medium of the disclosure may be a computer-readable signal medium, a computer-readable storage medium, or any combination of the computer-readable signal medium and the computer-readable storage medium. The computer-readable storage medium may be, for example, but not limited to, an electronic, magnetic, optical, electromagnetic, infrared, or semiconductor system, apparatus, or device, or any suitable combination of the above. More specific examples of the computer-readable storage medium may include, but not limited to: an electrically connected and portable computer disk having one or more wires, a hard drive, an RAM, an ROM, an erasable programmable read-only memory (EPROM or a flash memory), an optical fiber, a portable compact disk read-only memory (CD-ROM), an optical storage device, a magnetic storage device, or any suitable combination of the above. In the disclosure, the computer-readable storage medium may be any tangible medium that includes or stores a program that may be used by an instruction execution system, apparatus, or device or in combination with the instruction execution system, apparatus, or device. In the disclosure, the computer-readable signal medium may include a data signal propagated in a baseband or as part of a carrier wave, which carries computer-readable program codes. Such a propagated data signal may take various forms, including, but not limited to, an electromagnetic signal, an optical signal, or any suitable combination of the above. The computer-readable signal medium may further be any computer-readable medium apart from the computer-readable storage medium, and the computer-readable signal medium may send, propagate, or transmit programs used by the instruction execution system, apparatus, or device or in combination with the instruction execution system, apparatus, or device. Program codes included on the computer-readable medium may be transmitted by using any suitable medium, including, but not limited to, wire, optical cable, radio frequency (RF), etc., or any suitable combination of the above.

The above computer-readable medium may be included in the above electronic device, or exist separately without being fit into the electronic device.

The above computer-readable medium carries one or more programs. When executed by the electronic device, the one or more programs cause the electronic device to execute the method shown in the above example.

Computer program codes configured to execute operations of the disclosure may be written in one or more programming languages or a combination of the programming languages. The above programming languages include, but not limited to, object-oriented programming languages such as Java, Smalltalk and C++, and further include conventional procedural programming languages such as "C" programming language or similar programming languages. The program codes may be executed entirely on a user computer, executed partially on the user computer, executed as a stand-alone software package, executed partially on the user computer and partially on a remote computer, or executed entirely on the remote computer or a server. Where the remote computer is involved, the remote computer may be connected to the user computer by means of any kind of network, including the LAN or the WAN, or may be connected to an external computer (for example, the remote computer is connected by means of the Internet by an Internet service provider).

Flow diagrams and block diagrams in the accompanying drawings illustrate system structures, functions and operations, which may be implemented according to systems, methods and computer program products in various examples of the disclosure. In this regard, each block in the flow diagrams or the block diagrams may represent a module, a program segment, or part of codes, which may include one or more executable instructions configured to implement logical functions specified. It should also be noted that in some alternative implementations, functions noted in the blocks may also occur in sequences different from those in the accompanying drawings. For example, the functions represented by two continuous blocks may be actually implemented basically in parallel, and sometimes executed in reverse sequences, which depends on the involved functions. It should also be noted that each block in the block diagrams and/or the flow diagrams, and combinations of the blocks in the flow diagrams and/or the block diagrams, may be implemented by using dedicated hardware-based systems that implement the specified functions or operations, or may be implemented by using combinations of dedicated hardware and computer instructions.

The units described in the examples of the disclosure may be implemented in software or hardware. The names of the modules do not constitute limitations to the modules themselves in some cases. For example, a first acquisition unit may be further described as a "unit for acquiring at least two internet protocol addresses".

The above functions herein may be at least partially executed by one or more hardware logic components. For example, non-restrictively, demonstration types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the disclosure, a machine-readable medium may be a tangible medium that may include or store a program for use by the instruction execution system, apparatus, or device or in combination with the instruction execution system, apparatus, or device. The machine-readable medium may be a computer-readable signal medium or a computer-readable storage medium. The machine-readable medium may include, but not limited to, an electronic, magnetic, optical, electromagnetic, infrared, or semiconductor system, apparatus, or device, or any suitable combination of the above. More specific examples of the machine-readable storage medium may include an electrically connected and portable computer diskette based on one or more wires, a hard disk, a RAM, a ROM, an EPROM or a flash memory, an optical fiber, a portable CD-ROM, an optical storage device, a magnetic storage device, or any suitable combination of the above.

In a first aspect, according to one or more example of the disclosure, a method for garbage collection of a ZNS device is provided. The method includes:
valid data segments in a source zone to be collected in the ZNS device are determined according to file object metadata cached in a memory, where file objects corresponding to the file object metadata are stored in the ZNS device;
each valid data segment is read from the source zone, the read valid data segments are written into cache pools corresponding to the file objects to which the valid data segments belong in the memory according to the file objects to which the valid data segments belong, and the valid data segments in the same cache pool are aggregated into a valid aggregated data segment; and
a target cache pool to be written into the ZNS device is determined from all the cache pools, the valid aggregated data segment in the target cache pool is written into a target zone in the ZNS device based on a sequential writing mechanism, and storage space of the source zone is collected after all the valid data segments in the source zone are read.

According to one or more examples of the disclosure, the file object metadata includes a mapping relation between each data segment of the file object and an identifier of a zone in which each data segment is located in the ZNS device; and
correspondingly, the step that valid data segments in a source zone to be collected in the ZNS device are determined according to file object metadata cached in a memory includes:
data segments corresponding to the identifier of the source zone in each data segment of the file object are queried from the file object metadata cached in the memory as the valid data segments in the source zone according to an identifier of the source zone.

According to one or more examples of the disclosure, the step that each valid data segment is read from the source zone includes:
in response to a data volume of any valid data segment in the source zone exceeding a first data volume threshold, the any valid data segment is directly read from the source zone; or
at least two adjacent valid data segments and the invalid data segment between the at least two valid data segments are determined as an aggregated data segment according to a data volume of each adjacent valid data segment and a data volume of an invalid data segment between adjacent valid data segments in the source zone, and the aggregated data segment is read in one shot from the source zone.

According to one or more examples of the disclosure, the step that at least two adjacent valid data segments and the invalid data segment between the at least two valid data segments are determined as an aggregated data segment according to a data volume of each adjacent valid data segment and a data volume of an invalid data segment between adjacent valid data segments in the source zone includes:

After any first valid data segment is added into the aggregated data segment, a first adjacent valid data segment and a first adjacent invalid data segment after the first valid data segment are added into the aggregated data segment in response to determining that a data volume of the first adjacent invalid data segment after the first valid data segment is less than a second data volume threshold and a proportion of a total data volume of invalid data segments is less than a first preset proportion in a case that the first adjacent valid data segment and the first adjacent invalid data segment after the first valid data segment are added into the aggregated data segment.

According to one or more examples of the disclosure, the step that the read valid data segments are written into cache pools corresponding to the file objects to which the valid data segments belong in the memory includes:
valid data segments are acquired from the aggregated data segment, and the valid data segments are written into the cache pools corresponding to the file objects to which the valid data segments belong in the memory respectively in a case that the aggregated data segment is read in one shot from the source zone.

According to one or more examples of the disclosure, the step that a target cache pool to be written into the ZNS device is determined from all the cache pools includes:
any cache pool is determined as the target cache pool to be written into the ZNS device in response to determining that a data volume in any cache pool exceeds a third data volume threshold; or
all the cache pools are determined as the target cache pool to be written into the ZNS device in response to determining that a total data volume in all the cache pools exceeds a second preset proportion of total capacity of all the cache pools.

According to one or more examples of the disclosure, the step that the valid aggregated data segment in the target cache pool is written into a target zone in the ZNS device based on a sequential writing mechanism includes:
a target data volume to be written into the target zone in the valid aggregated data segment in the target cache pool is determined according to a data volume of a sector of the ZNS device, a data volume of internal metadata in the sector, and a data volume of the valid aggregated data segment in the target cache pool; and
a data segment of the target data volume is acquired from the valid aggregated data segment in the target cache pool as a data segment to be written, and the data segment to be written into the target zone is written into the ZNS device based on the sequential writing mechanism.

According to one or more examples of the disclosure, the step that a target data volume to be written into the target zone in the valid aggregated data segment in the target cache pool is determined according to a data volume of a sector of the ZNS device, a data volume of internal metadata in the sector, and a data volume of the valid aggregated data segment in the target cache pool includes:
a target number of sectors required is determined according to the data volume of the valid aggregated data segment in the target cache pool and the data volume of the sector; and
a first product of the data volume of the sector and the target number and a second product of the data volume of the internal metadata in the sector and the target number are determined, and a difference between the first product and the second product is determined as the target data volume, so that there is no residual space in each sector occupied after the data segment to be written of the target data volume is written into the target zone.

According to one or more examples of the disclosure, the step that the valid aggregated data segment in the target cache pool is written into a target zone in the ZNS device based on a sequential writing mechanism includes:
the valid aggregated data segment is sequentially written into each sector of the target zone, and the internal metadata in each sector is recorded, where the internal metadata is configured to record a file object to which a current sector belongs and position information in the file object to which the current sector belongs.

According to one or more examples of the disclosure, the method further includes:
whether a current data segment belongs to the same file object as an adjacent preceding data segment in the zone is determined when any current data segment is written into any zone of the ZNS device, and metadata of the current data segment and metadata of the previous data segment are merged in response to the current data segment belonging to the same file object as the adjacent preceding data segment in the zone.

In a second aspect, according to one or more examples of the disclosure, a device for garbage collection of a ZNS device is provided. The device includes:
a valid data determining unit, configured to determine, according to file object metadata cached in a memory, valid data segments in a source zone to be collected in the ZNS device, where file objects corresponding to the file object metadata are stored in the ZNS device;
a reading unit, configured to read each valid data segment from the source zone, write, according to file objects to which the valid data segments belong, the read valid data segments into cache pools corresponding to the file objects to which the valid data segments belong in the memory, and aggregate the valid data segments in the same cache pool into a valid aggregated data segment; and
a writing unit, configured to determine a target cache pool to be written into the ZNS device from all the cache pools, write, based on a sequential writing mechanism, the valid aggregated data segment in the target cache pool into a target zone in the ZNS device, and collect storage space of the source zone after all the valid data segments in the source zone are read.

According to one or more examples of the disclosure, the file object metadata includes a mapping relation between each data segment of the file object and an identifier of a zone in which each data segment is located in the ZNS device; and
correspondingly, when determining, according to the file object metadata cached in the memory, the valid data segments in the source zone to be collected in the ZNS device, the valid data determining unit is configured to:
query, according to an identifier of the source zone, data segments corresponding to the identifier of the source zone in each data segment of the file object from the file object metadata cached in the memory as the valid data segments in the source zone.

According to one or more examples of the disclosure, when reading each valid data segment from the source zone, the reading unit is configured to:
in response to a data volume of any valid data segment in the source zone exceeding a first data volume threshold, directly read the any valid data segment from the source zone; or
determine, according to a data volume of each adjacent valid data segment and a data volume of an invalid data segment between adjacent valid data segments in the source zone, at least two adjacent valid data segments and the invalid data segment between the at least two valid data segments as an aggregated data segment, and read the aggregated data segment in one shot from the source zone.

According to one or more examples of the disclosure, when determining, according to the data volume of each adjacent valid data segment and the data volume of the invalid data segments between the adjacent valid data segments in the source zone, the at least two adjacent valid data segments and the invalid data segments between the at least two valid data segments as the aggregated data segment, the reading unit is configured to:
after adding any first valid data segment into the aggregated data segment, add a first adjacent valid data segment and a first adjacent invalid data segment after the first valid data segment into the aggregated data segment in response to determining that a data volume of the first adjacent invalid data segment after the first valid data segment is less than a second data volume threshold and a proportion of a total data volume of invalid data segments is less than a first preset proportion in a case that the first adjacent valid data segment and the first adjacent invalid data segment after the first valid data segment are added into the aggregated data segment.

According to one or more examples of the disclosure, when writing the read valid data segments into the cache pools corresponding to the file objects to which the valid data segments belong in the memory, the reading unit is configured to:
acquire valid data segments from the aggregated data segment and write the valid data segments into the cache pools corresponding to the file objects to which the valid data segments belong in the memory respectively in a case that the aggregated data segment is read in one shot from the source zone.

According to one or more examples of the disclosure, when determining the target cache pool to be written into the ZNS device from all the cache pools, the writing unit is configured to:
in response to determining that a data volume in any cache pool exceeds a third data volume threshold, determine the any cache pool as the target cache pool to be written into the ZNS device; or
determine all the cache pools as the target cache pool to be written into the ZNS device in response to determining that a total data volume in all the cache pools exceeds a second preset proportion of total capacity of all the cache pools.

According to one or more examples of the disclosure, when writing, based on the sequential writing mechanism, the valid aggregated data segment in the target cache pool into the target zone in the ZNS device, the writing unit is configured to:
determine, according to a data volume of a sector of the ZNS device, a data volume of internal metadata in the sector, and a data volume of the valid aggregated data segment in the target cache pool, a target data volume to be written into the target zone in the valid aggregated data segment in the target cache pool; and
acquire a data segment of the target data volume from the valid aggregated data segment in the target cache pool as a data segment to be written, and write, based on the sequential writing mechanism, the data segment to be written into the target zone in the ZNS device.

According to one or more examples of the disclosure, when determining, according to the data volume of a sector of the ZNS device, the data volume of the internal metadata in the sectors, and the data volume of the valid aggregated data segment in the target cache pool, the target data volume to be written into the target zone in the valid aggregated data segment in the target cache pool, the writing unit is configured to:
determine a target number of sectors required according to the data volume of the valid aggregated data segment in the target cache pool and the data volume of the sector; and
determine a first product of the data volume of the sector and the target number and a second product of the data volume of the internal metadata in the sector and the target number, and determine a difference between the first product and the second product as the target data volume, so that there is no residual space in each sector occupied after the data segment to be written of the target data volume is written into the target zone.

According to one or more examples of the disclosure, when writing, based on the sequential writing mechanism, the valid aggregated data segment in the target cache pool into the target zone in the ZNS device, the writing unit is configured to:
sequentially write the valid aggregated data segment into each sector of the target zone, and record the internal metadata in each sector, where the internal metadata is configured to record a file object to which a current sector belongs and position information in the file object to which the current sector belongs.

According to one or more examples of the disclosure, the writing unit is further configured to:
determine whether a current data segment belongs to the same file object as an adjacent preceding data segment in the zone when any current data segment is written into any zone of the ZNS device, and merge metadata of the current data segment and metadata of the previous data segment in response to the current data segment belonging to the same file object as the adjacent preceding data segment in the zone.

In a third aspect, according to one or more examples of the disclosure, an electronic device is provided. The electronic device includes: at least one processor and a memory, where
the memory stores a computer-executable instruction; and
the at least one processor executes the computer-executable instruction stored in the memory, such that the at least one processor executes the method for garbage collection of a ZNS device of various possible designs of the above first aspect and second aspect.

In a fourth aspect, according to one or more examples of the disclosure, a computer-readable storage medium is provided. The computer-readable storage medium stores a computer-executable instruction, and a processor implements the method for garbage collection of a ZNS device of various possible designs of the above first aspect and second aspect when executing the computer-executable instruction.

In a fifth aspect, according to one or more examples of the disclosure, a computer program product is provided. The computer program product includes a computer-executable instruction, where a processor implements the method for garbage collection of a ZNS device of various possible designs of the above first aspect and second aspect when executing the computer-executable instruction.

What are described above are merely for illustration of the preferred examples of the disclosure and the technical principles used. It should be understood by those skilled in the art that the disclosed scope involved in the disclosure is not limited to the technical solution formed by a specific combination of the technical features described above, and should also cover other technical solutions formed by any combination of the technical features described above or equivalent features of the technical features without departing from the disclosed concept described above, for example, the technical solution formed by replacing the above-mentioned features with the technical features having similar functions disclosed in (but not limited to) the disclosure.

Furthermore, although each operation is described in a specific order, this should not be understood as requiring the operations to be executed in the specific order shown or in a sequential order. In a certain environment, multitasking and parallel processing may be advantageous. Similarly, although several specific implementation details are included in the above discussion, these details should not be interpreted as limiting the scope of the disclosure. Some features described in the context of a single example can further be implemented in a single example in a combined mode. Similarly, although several specific implementation details are included in the above discussion, these details should not be interpreted as limiting the scope of the present disclosure. On the contrary, various features described in the context of a single example can also be implemented in multiple examples separately or in any suitable sub-combination mode.

Although the subject matter has been described in language specific to structural features and/or method logical actions, it should be understood that the subject matter defined in the appended claims may not necessarily be limited to the specific features or actions described above. On the contrary, the specific features and actions described above are merely exemplary forms to implement the claims.

## Claims

1. A method for garbage collection of a zoned storage device, comprising:
determining (S201), according to file object metadata cached in a memory, valid data segments in a source zone to be collected in the zoned storage device, wherein file objects corresponding to the file object metadata are stored in the zoned storage device;
reading (S202) each valid data segment from the source zone, writing, according to file objects to which the valid data segments belong, the read valid data segments into cache pools corresponding to the file objects to which the valid data segments belong in the memory, and aggregating the valid data segments in the same cache pool into a valid aggregated data segment; and
determining (S203) a target cache pool to be written into the zoned storage device from all the cache pools, writing, based on a sequential writing mechanism, the valid aggregated data segment in the target cache pool into a target zone in the zoned storage device, and collecting (S204) storage space of the source zone after all the valid data segments in the source zone are read.

2. The method of claim 1, wherein the file object metadata comprises a mapping relation between each data segment of the file object and an identifier of a zone in which each data segment is located in the zoned storage device; and
correspondingly, determining (S201), according to file object metadata cached in a memory, valid data segments in a source zone to be collected in the zoned storage device comprises:
querying, according to an identifier of the source zone, data segments corresponding to the identifier of the source zone in each data segment of the file object from the file object metadata cached in the memory as the valid data segments in the source zone.

3. The method of claim 1, wherein reading each valid data segment from the source zone comprises:
in response to a data volume of any valid data segment in the source zone exceeding a first data volume threshold, directly reading the any valid data segment from the source zone; or
determining, according to a data volume of each adjacent valid data segment and a data volume of an invalid data segment between adjacent valid data segments in the source zone, at least two adjacent valid data segments and the invalid data segment between the at least two valid data segments as an aggregated data segment, and reading the aggregated data segment in one shot from the source zone.

4. The method of claim 3, wherein determining, according to a data volume of each adjacent valid data segment and a data volume of an invalid data segment between adjacent valid data segments in the source zone, at least two adjacent valid data segments and the invalid data segment between the at least two valid data segments as an aggregated data segment comprises:
after adding any first valid data segment into the aggregated data segment, adding a first adjacent valid data segment and a first adjacent invalid data segment after the first valid data segment into the aggregated data segment in response to determining that a data volume of the first adjacent invalid data segment after the first valid data segment is less than a second data volume threshold and a proportion of a total data volume of invalid data segments is less than a first preset proportion in a case that the first adjacent valid data segment and the first adjacent invalid data segment after the first valid data segment are added into the aggregated data segment.

5. The method of claim 3, wherein writing the read valid data segments into cache pools corresponding to the file objects to which the valid data segments belong in the memory comprises:
acquiring valid data segments from the aggregated data segment and writing the valid data segments into the cache pools corresponding to the file objects to which the valid data segments belong in the memory respectively in a case that the aggregated data segment is read in one shot from the source zone.

6. The method of claim 1, wherein determining a target cache pool to be written into the zoned storage device from all the cache pools comprises:
in response to determining that a data volume in any cache pool exceeds a third data volume threshold, determining the any cache pool as the target cache pool to be written into the zoned storage device; or
determining all the cache pools as the target cache pool to be written into the zoned storage device in response to determining that a total data volume in all the cache pools exceeds a second preset proportion of total capacity of all the cache pools.

7. The method of claim 1, wherein writing, based on a sequential writing mechanism, the valid aggregated data segment in the target cache pool into a target zone in the zoned storage device comprises:
determining (S2031), according to a data volume of a sector of the zoned storage device, a data volume of internal metadata in the sector, and a data volume of the valid aggregated data segment in the target cache pool, a target data volume to be written into the target zone in the valid aggregated data segment in the target cache pool; and
acquiring (S2032) a data segment of the target data volume from the valid aggregated data segment in the target cache pool as a data segment to be written, and writing, based on the sequential writing mechanism, the data segment to be written into the target zone in the zoned storage device.

8. The method of claim 7, wherein determining, according to a data volume of a sector of the zoned storage device, a data volume of internal metadata in the sector, and a data volume of the valid aggregated data segment in the target cache pool, a target data volume to be written into the target zone in the valid aggregated data segment in the target cache pool comprises:
determining a target number of sectors required according to the data volume of the valid aggregated data segment in the target cache pool and the data volume of the sector; and
determining a first product of the data volume of the sector and the target number and a second product of the data volume of the internal metadata in the sector and the target number, and determining a difference between the first product and the second product as the target data volume, so that there is no residual space in each sector occupied after the data segment to be written of the target data volume is written into the target zone.

9. The method of any one of claims 1-8, wherein writing, based on a sequential writing mechanism, the valid aggregated data segment in the target cache pool into a target zone in the zoned storage device comprises:
sequentially writing the valid aggregated data segment into each sector of the target zone, and recording internal metadata in each sector, wherein the internal metadata is configured to record a file object to which a current sector belongs and position information in the file object to which the current sector belongs.

10. The method of claim 1, further comprising:
determining whether a current data segment belongs to the same file object as an adjacent preceding data segment in the zone in a case that any current data segment is written into any zone of the zoned storage device, and merging metadata of the current data segment and metadata of the previous data segment in response to the current data segment belonging to the same file object as the adjacent preceding data segment in the zone.

11. A device for garbage collection of a zoned storage device, comprising:
a valid data determining unit (501), configured to determine, according to file object metadata cached in a memory, valid data segments in a source zone to be collected in the zoned storage device, wherein file objects corresponding to the file object metadata are stored in the zoned storage device;
a reading unit (502), configured to read each valid data segment from the source zone, write, according to the file objects to which the valid data segments belong, the read valid data segments into cache pools corresponding to the file objects to which the valid data segments belong in the memory, and aggregate the valid data segments in the same cache pool into a valid aggregated data segment; and
a writing unit (503), configured to determine a target cache pool to be written into the zoned storage device from all the cache pools, write, based on a sequential writing mechanism, the valid aggregated data segment in the target cache pool into a target zone in the zoned storage device, and collect storage space of the source zone after all the valid data segments in the source zone are read.

12. An electronic device, comprising: at least one processor and a memory, wherein
the memory stores a computer-executable instruction; and
the at least one processor executes the computer-executable instruction stored in the memory, such that the at least one processor executes the method of any of claims 1-10.

13. A computer-readable storage medium, storing a computer-executable instruction, wherein a processor implements the method of any of claims 1-10 when executing the computer-executable instruction.

14. A computer program product, comprising: a computer-executable instruction, wherein a processor implements the method of any of claims 1-10 when executing the computer-executable instruction.
